# EUROPEAN PATENT SPECIFICATION

(11) **EP 1 040 748 B1**
(45) Date of publication and mention of the grant of the patent: **12.11.2003**
(21) Application number: 00106886.5
(22) Date of filing: 31.03.2000
(51) Int. Cl.: A01D 46/26, F15B 11/15

(54) **Pneumatic actuator for operating combs for harvesting fruits**
Pneumatischer Antrieb zum Betreiben der Kämme zum Ernten von Früchten
Actuateur pneumatique pour commander les peignes d'une récolteuse de fruits

(30) Priority: 31.03.1999 IT BO990151
(43) Date of publication of application: 04.10.2000
(73) Proprietor: Campagnola S.R.L., 40069 Zola Predosa (Bologna) (IT)
(72) Inventor: Bulgarelli, Elio, 40020 Casalfiumanese (Bologna) (IT)
(74) Representative: Negrini, Elena

(56) References cited:
- FR-A- 604 434
- FR-A- 2 157 429
- FR-A- 2 327 719
- US-A- 1 584 715
- US-A- 1 660 528
- US-A- 3 812 663

## Description

The present invention relates to the technical field concerning the agriculture equipment and devices for harvesting fruits, in particular olives, coffee and similar fruits.

The present invention, particularly, concerns a pneumatic actuator for driving operation means, for instance combs, for shaking and lashing olives, coffee, and fruits.

The known pneumatic actuators are internally provided with ducts to convey the compressed air toward the cylindrical chambers of the actuator. Furthermore, said actuators have the sliding valve connected to the piping ducts and the auxiliary channels, see i.e. US-A-1 584 715.

The auxiliary channels, alternatively enabled by the piston stroke, are fit to recycle the compressed air piping it up to the sliding valve allowing to switch it for the flow connection to a corresponding feeding duct.

Besides, some external outlets are provided for exhausting the air. Said known external outlets are alternatively opened/closed directly by the piston, depending by the related operating position: the piston opens an outlet connecting this latter to the related auxiliary channel and, at the same time, closes another external outlet disconnecting it from the related auxiliary channel. For such purpose the piston must be peripherally equipped, partially along its longitudinal development, with an annular relief to enable/disable said outlets.

Insofar the piston is very long and, for having the same length of the piston run, the dimensions of the related cylindrical chamber is very long with the consequence of increasing the dimensions of the pneumatic actuator.

The considerable dimensions of the pneumatic actuator cause handling difficulties for the operator for the harvesting.

Must be underlined also the difficulties of producing and designing said actuator because of the ducts and the auxiliary channels complexity, and for the difficult positioning of their outlets, whose wrong positioning in the cylinder causes malfunctions of the pneumatic actuator.

Object of the present invention is to propose a compact and light pneumatic actuator, for driving operating means.

Further object is to propose a pneumatic actuator connectable to combs of different kinds and sizes.

Other object is to propose a pneumatic actuator of simple realization and low cost.

The characteristics of the invention are highlighted in the following with reference to attached drawing sheets, in which:

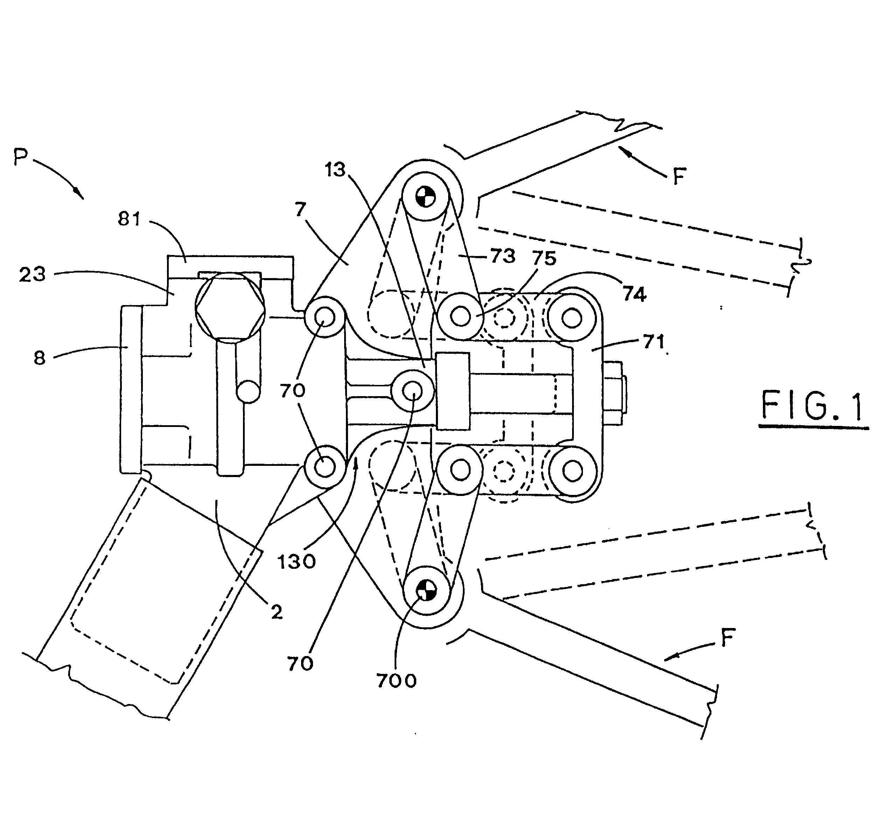

- figure 1 shows a schematic side view of the pneumatic actuator connected with operation means in the extreme opening condition and, with dash-lines, the extreme closing conditions, in which some part has been removed to make the schematic view more clear;
- figure 2 shows an exploded view of the main elements of the actuator, some of them are shown in a sectional view;

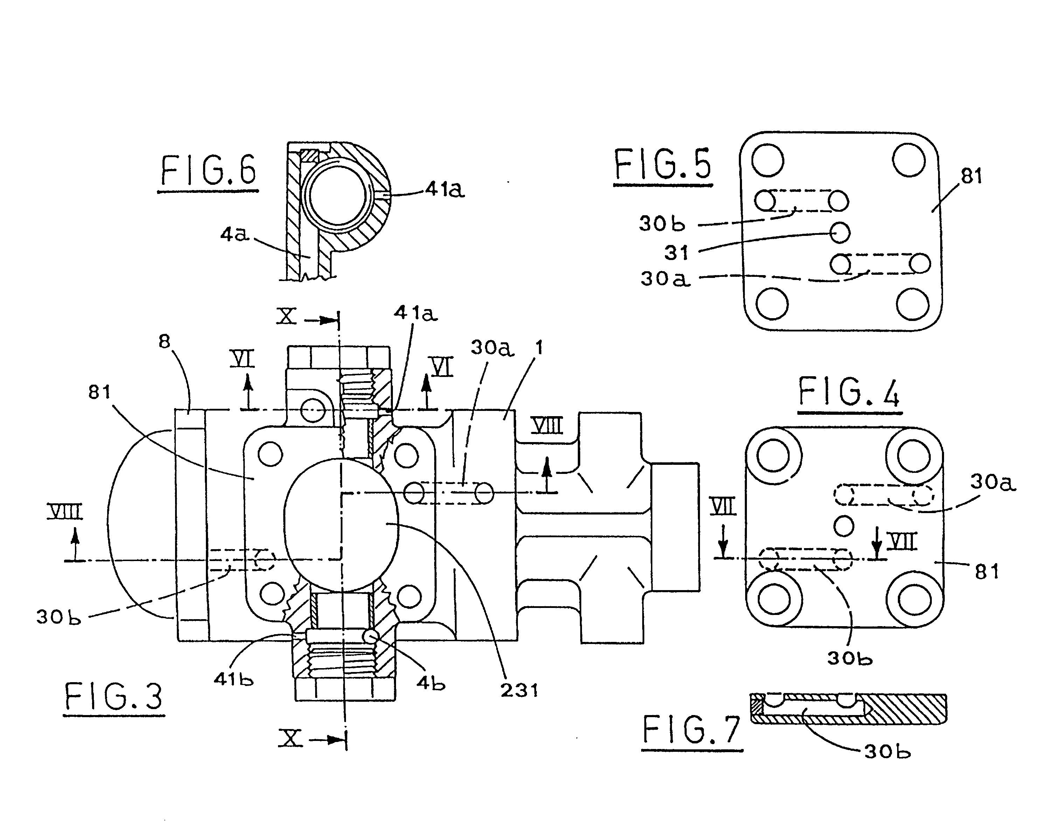

- figure 3 shows a partially sectional top view of the actuator in figure 1;
- figures 4 and 5 show views of two opposite faces of an element of the actuator;
- figure 6 shows a partial view at the plane VI-VI in figure 3;
- figure 7 shows a view at the plane VII - VII in figure 4;
- figure 8 shows a partial view at the plane VIII - VIII in figure 3;
- figure 9 shows a partial view at the plane IX-IX in figure 8;
- figure 10 shows a view at the plane X-X in figure 3;
- figure 10a shows a view partially broken in figure 10;
- figure 11 shows a partial side view of a second embodiment of the pneumatic actuator;
- the figures 12a and 12b show a operation scheme in correspondence of the piston extreme positions of the pneumatic actuator,
- the figures 13a and 13b each shows a longitudinal sectional view of a variant of the piston in two different positions inside the cylinder;
- the figure 14 shows a partial schematic view in transversal section of a further variant of the actuator,
- the figure 15 shows a schematic view at the plane XV-XV in figure 14.

Referring to the figure from 1 to 13b, numeral P indicates a pneumatic actuator fit to drive operation means, particularly combs F for shaking branches of trees for causing the fall of the fruits, such as olives, coffee and similar.

The pneumatic actuator P comprises a central body 1 having a longitudinal cylindrical seat 10 housing a cylinder 11 in which an alternative piston 12 slides which is fixed to an end of a related stem 120.

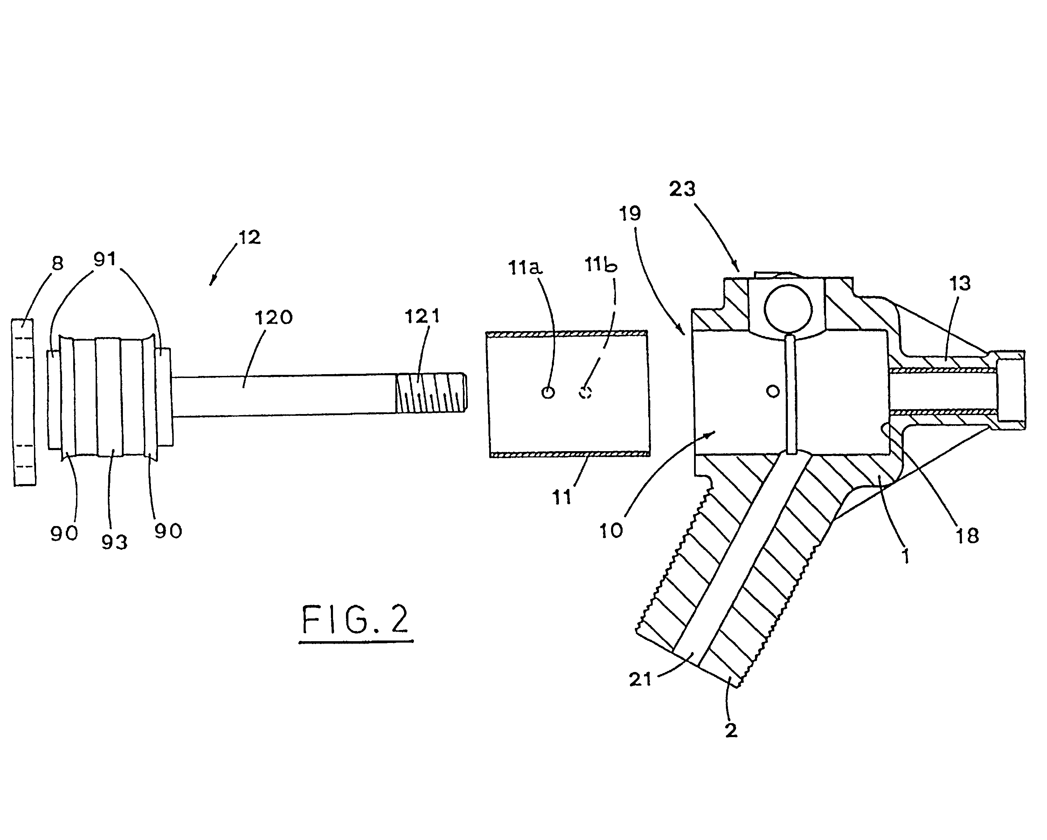

The free ends of said piston 12, schematically showed in figure 2, are essentially provided with damper means 91 and related seals 90 fit for engaging the walls of the cylinder 11 to ensure the pneumatic sealing. Besides, in the median portion of the piston 12 there is a bush 93 fit for centering this latter in the cylinder 11.

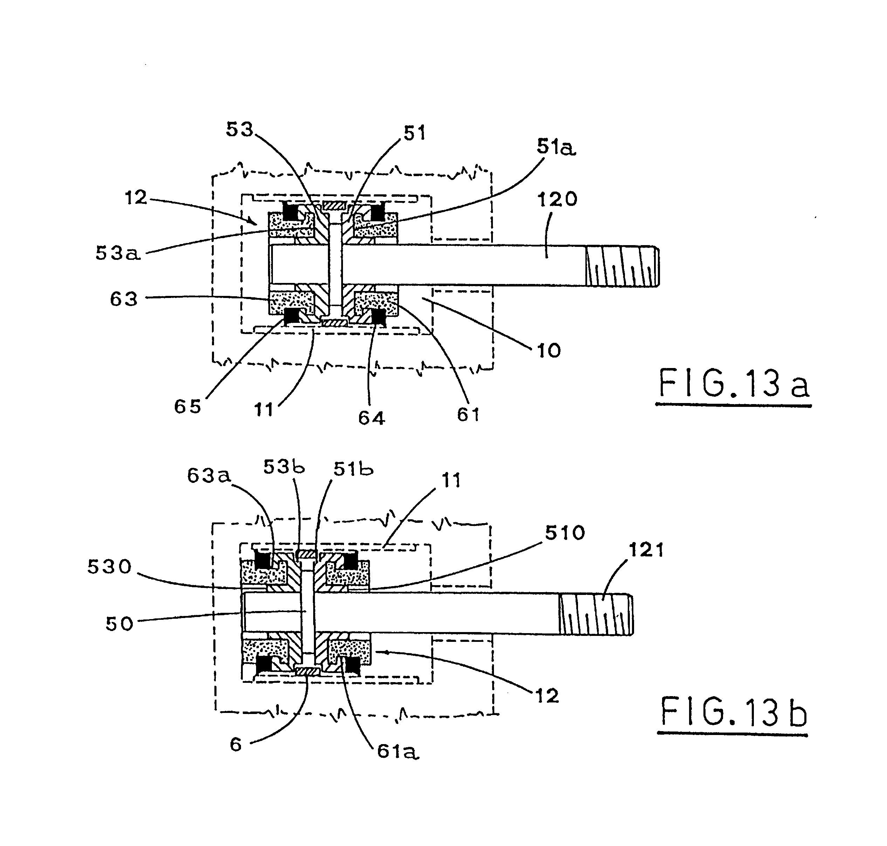

The piston 12, according to the variant of figures 13a and 13b, comprises two annular bodies, first 51 and second 53, laying against the opposite sides of a shoulder 50 carried out close to an end of the stem 120 connected to the piston 12.

The annular bodies, first 51 and second 53, have respectively longitudinal passthrough holes, 510 and 530, having smaller diameter than that of the stem 120.

The free ends of the piston 12 are provided with annular shock absorbers, first 61 and second 63 respectively inserted into the annular recess 51a and 53a of the annular bodies, first 51 and second 53. The shock absorbers 61 and 63 partially extend inside the piston 12 ensuring a reduced dimension and the anti-shock effect.

The shock absorbers, first 61 and second 63, have a peripheral annular groove, respectively 61a and 63a, in each one there is a seal, respectively 64 and 65, that is interposed between the shock absorbers 61, 63 and the annular bodies 51, 53. The seals, 64 and 65, guarantee the pneumatic sealing between the wall of the cylinder 11 and the piston 12.

Each annular body, first 51 and second 53, has, in correspondence of the shoulder 50, an annular chamfering, respectively 51b and 53b.

Said chamfers, 51b and 53b, form an housing for a bush 6. The bush 6 contacts directly the walls of the cylinder 11 guiding the piston 12 during its reciprocating motion inside the cylinder 10, to avoid eventual transversal oscillations.

This variant of piston 12 has small dimensions and is easy to assembly.

The ends of the cylindrical seat 10 are one internal head 18 integral to the central body 1 and an external opening 19 closed by a closure 8 between them the piston 12 oscillates.

In the central body 1 is carried out, in correspondence of the internal head 18, a tubular element 13 of such section for housing in a sliding manner the stem 120 whose threaded end 121 comes out from the tubular element 13 in correspondence of every position of the piston 12.

The tubular element 13 has three holes 70 to fix, by related screw means, two plates 7 provided with correspondents holes.

The plates 7 have at their ends related passthrough seats 700 to which are hinged related combs F, each of them integral with a lever 73, hinged to a respective connecting rod 74 by means of articulated joints 75. The two connecting rods 74 are pivoted to an arm 71 fixed perpendicularly to the threaded free end 121 so transmitting the movement from the piston 12 to the combs F.

The tubular element 13 has lateral cavities 130 which allow the free movement of the articulated joints 75 and of the elements connected thereto.

The lower part of the central body 1 has a connecting arm 2, externally threaded and internally provided with a feeding duct 21, fit to link the feeding pneumatic source (not shown).

The central body 1 is equipped, at the opposite side of the connecting arm 2, with a distributing valve 23, for distributing the compressed air into the actuator, comprising a feeding chamber 231 inside which a movable mean 235 slides, whose ends, having sealing means, slide into two switching chambers, first 233a and second 233b, located at the opposite sides of the feeding chamber 231.

The feeding chamber 231 is in flow communication with the feeding duct 21 through two ducts, first 21a and second 21b, extending along the external wall of the cylinder 11. The feeding chamber 231 is closed by a closure 81.

Two delivery channels, first 30a and second 30b, start from the feeding chamber 231 and flow respectively into the internal chamber 10a and into the external chamber 10b of the cylindrical seat 10.

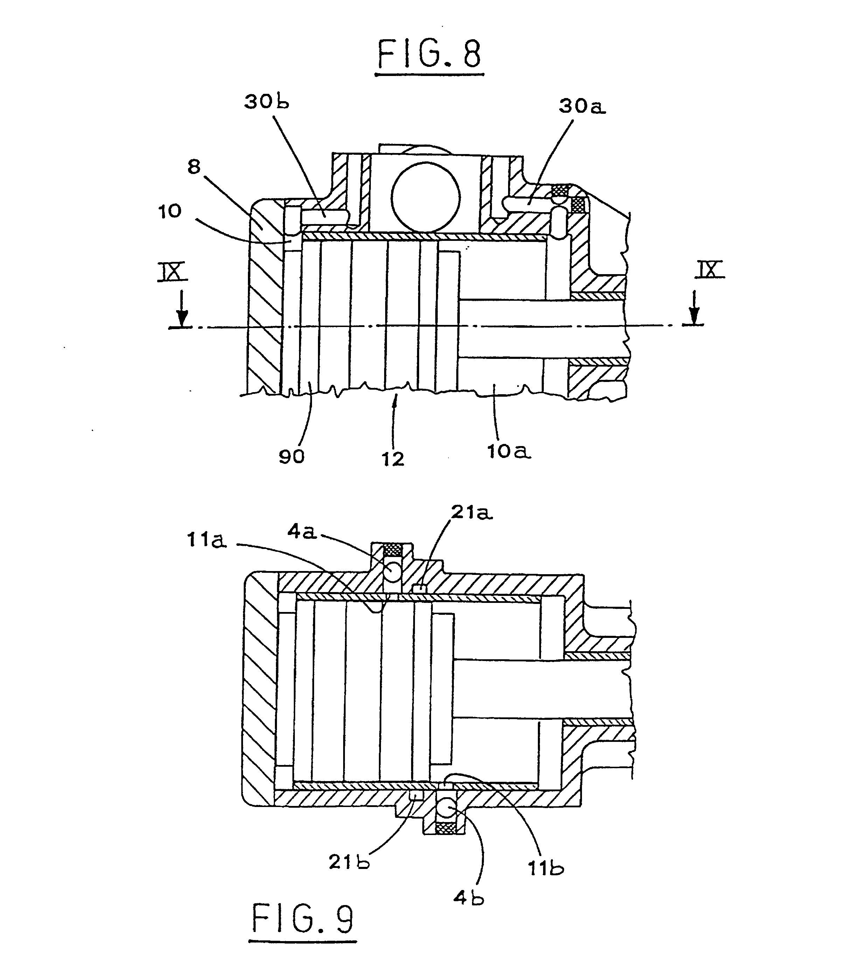

The first delivery channel 30a starts from the feeding chamber 231, passes through the closure 81, inside the central body 1 up to flows into the internal chamber 10a (figure 8).

The second delivery channel 30b starts from the feeding chamber 231, passes through the closure 81, inside the central body 1 until the external chamber 10b (figure 8).

The two delivery channels, first 30a and second 30b, are alternatively enabled, in accordance with the operational phases of pneumatic feeding of the piston 12, from the movable mean 235 by an associated switching element 234 which reaches two distinct operational positions, respectively H1 and H2.

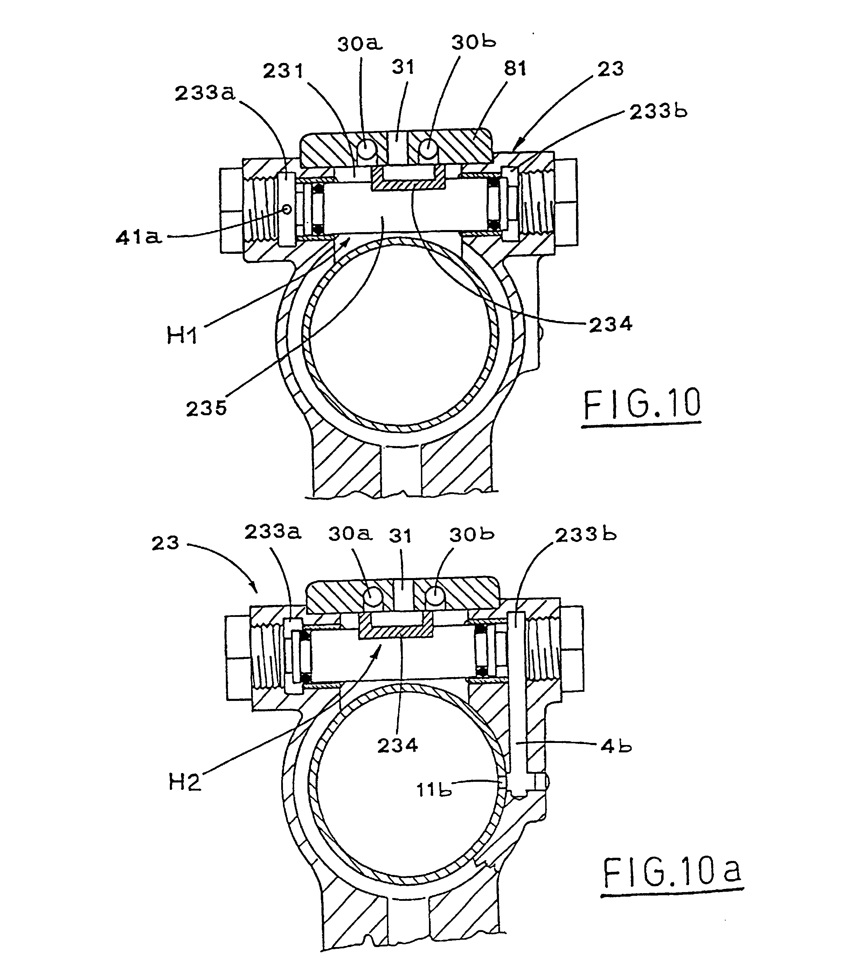

When the switching element 234 is in position H1 (figure 10), the first delivery channel 30a communicates directly with the two ducts, 21a and 21b, of the feeding duct 21, while the second delivery channel 30b communicates with an external exhausting channel 31 carried out in the closure 81.

When the switching element 234 is in position H2 (figure 10a), the second delivery channel 30b communicates directly with the two ducts, 21a and 21b, of the feeding duct 21, while the first delivery channel 30b communicates with the external exhausting channel 31.

On the side wall, the cylinder 11 has two holes, first 11a and second 11b, diametrically opposed and slightly axially offset. The first hole 11a is located near the first duct 21a, between this latter and the external head of the cylinder 11 (figure 9), while the second hole 11b is located near the second duct 21b, between this latter and the internal head of the cylinder 11 (figure 9).

Said two holes, 11a and 11b, are therefore located close to the median zone of the cylinder 11, and their axial offset is arranged in such way that the piston 12, during its alternative movement inside the cylinder 11, closes always at least one of them.

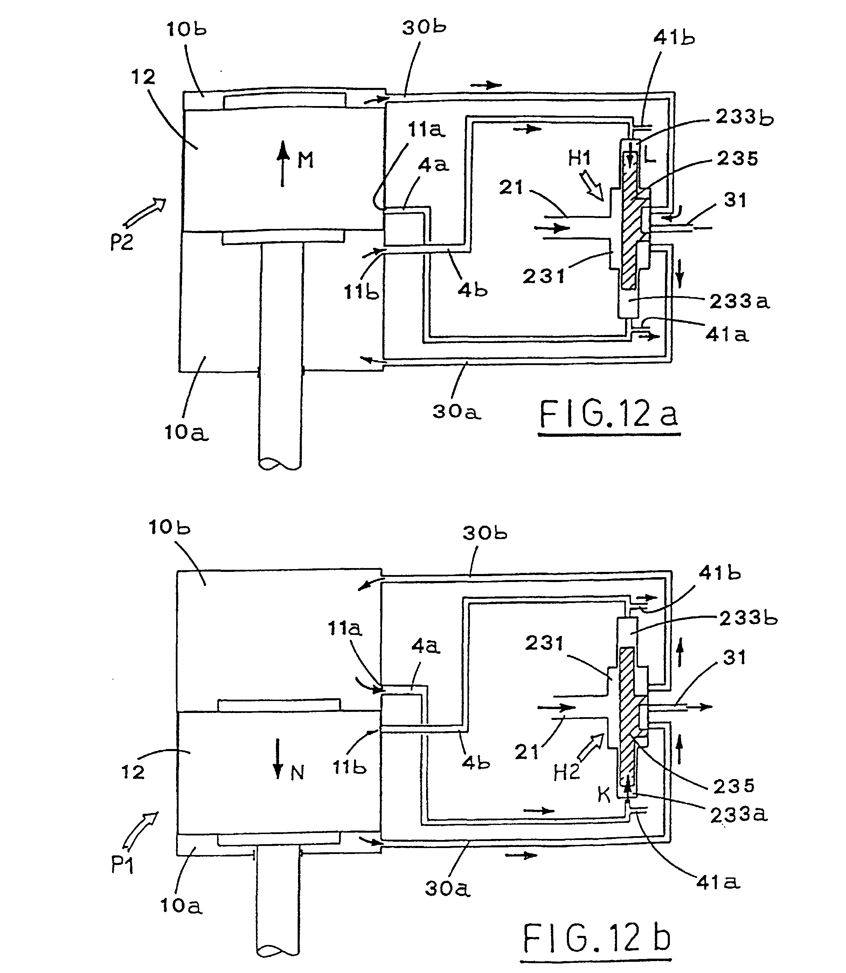

Referring to the figures 2, 12a and 12b, in correspondence of the position P1, the piston 12 is close to the internal head 18 and the first hole 11a is open while the second hole 11b is closed. In correspondence of the position P2, the piston 12 is close to the closure 8 and the second hole 11b which is free while the first hole 11a is closed.

When the piston 12 is in whatever intermediate position between the two extreme positions P1 and P2, the two holes, first 11a and second 11b, are both closed.

From said two holes, first 11a and second 11b, two return channels, respectively first 4a and second 4b, start and are fit for connecting, alternatively according to the position of the piston 12, the two chambers, external 10b and internal 10a, of the cylinder 11 with the two switching chambers, respectively first 233a and second 233b.

The two return channels, 4a and 4b, flow also to outside of the actuator respectively through outlets 41a and 41b.

This allows the backflow of the air up to the switching chambers, 233a or 233b, to switch the movable mean 235.

The section of the external outlets, respectively 41a and 41b, is dimensioned to permit only a little and unimportant loss of air backflow, therefore without reducing the necessary flow needed for switching.

The two outlets, 41a and 41b, have the important function of bleeding the return channels, respectively first 4a and second 4b, closed by the piston 12 during the commutation phase of the distributing valve 23.

The operation of the actuator is schematically shown in the figures 12a and 12b. In this latter figure the piston 12 is in the position P1, while the movable mean 235 and the related switching element 234 are in the position H2.

The second delivery channel 30b, is set in flow communication by means of the switching element 234 in position H2, and connects the feeding duct 21 to the external chamber 10b during expansion phase. The first delivery channel 30a, closed by the switching element 234 in position H2, connects the internal chamber 10a with the external exhausting channel 31.

The first hole 11a is free and connects the first return channel 4a to the external chamber 10b and to the first switching chamber 233a. The second hole 11b is closed by the piston 12 so that the second return channel 4b is closed.

The compressed feeding air arrives into the external chamber 10b via the second delivery channel 30b, flows through the first return channel 4a, and comes into the first switching chamber 233a, where it pushes the movable mean 235 without substantial compressed air loss through the outlet 41a.

So, the movable mean 235 is pushed in the direction indicated by the arrow K up to reach its other operational position referred with H1 in figure 12a. During said switching, the eventual remaining air inside the closed second return channel 4b, comes out through the outlet 41b and avoids the stalling of the movable mean 235, which reaches the position H1 (figure 12a) connecting, by means of the related switching element 234, the first delivery channel 30a to the feeding duct 21. The second delivery channel 30b is set in communication with the external exhausting channel 31.

Now the compressed feeding air, being flowed inside the feeding duct 21, passing through the first delivery channel 30a, reaches into the internal chamber 10a, where it pushes the piston 12 in the direction showed by the arrow M in figure 12a.

The piston 12, shifting in the direction M, closes the first hole 11a, closing the first return channel 4a and whose air comes out through the outlet 41a. The air in the external chamber 10b comes out through the second delivery channel 30b communicating with the external exhausting channel 31.

The piston 12, continuing its run, arrives in the position P2 making free the second hole 11b, opening the second return channel 4b from where the compressed feeding air inside the internal chamber 10a arrives in the second switching chamber 233b to switch the movable mean 235 into the position H2. In this way the movable mean 235, being pushed in the direction indicates by arrow L, connects the second delivery channel 30b with the feeding channel 21 and connects the first delivery channel 30a with the external exhausting channel 31.

When the movable mean 235 shifts from the position H1 to the position H2, in the direction L, the compressed air remaining inside the first return channel 4a comes out through the outlet 41a avoiding the stalling of the movable mean.

The compressed feeding air, flowed from the feeding duct 21 through the second delivery channel 30b, enters into the external chamber 10b pushing the piston 12 in the direction indicated by the arrow N in figure 12b.

The piston 12, shifting in the direction N, closes the second hole 11b, and then the second return channel 4b whose remaining air comes out through the outlet 41b. The air in the internal chamber 10a comes out from the first delivery channel 30a, communicating with the external exhausting channel 31. The piston 12, continuing its run, arrives in the beginning position P1 opening the first hole 11a and enabling again the first return channel 4a.

The sequence of the operational steps achieves the alternative motion of the piston 12 and therefore of the arm 71, by mans of the connecting rod 74, the articulated joints 75 and the levers 73, that transfer the alternate motion to the combs F.

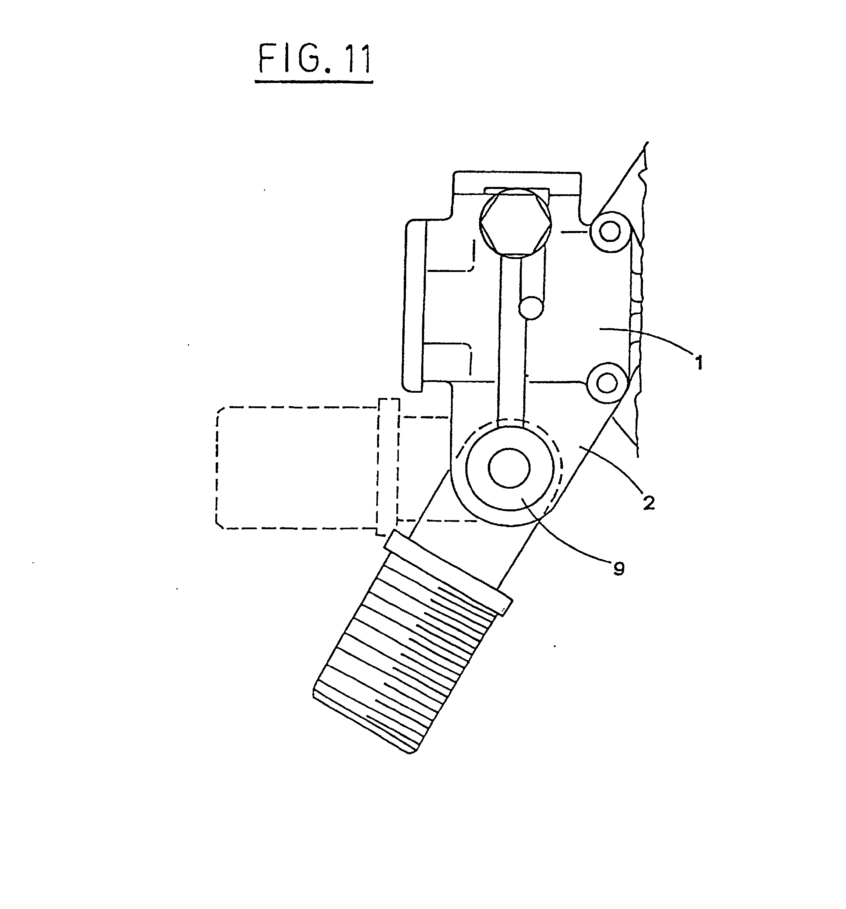

In the variant schematically showed in figure 11, the connection arm 2 is rotationally connected by means of a coupling 9 with the feeding pneumatic source consisting in a rod (not shown). In said variant the actuator is articulated with respect to the rod allowing an optimal orientation of the combs F.

The disposition of the external outlets allows to carry out a compact actuator and therefore, to carry out a shorter cylinder chamber in comparison with known actuator having the same piston run. Besides the actuator has a very small dimension and its total structure, including the related tools and working means, is compact and light.

Because said external outlets are opened, it carries out a reliable evacuation of air which eventually remains inside the return channels allowing to switch the movable mean immediately and effectively.

The structure of the cylindrical seat 10, the distributing valve 23 and the connection arm 2 as an integral piece (central body 1), it avoids the assembling of said components, as happen in the known solutions.

Besides, the positioning of the feeding duct facing the distributing valve, simplifies the maintenance.

The development of the feeding ducts against the external walls of the cylinder 11 allows an advantageous heating of the feeding air due to the increasing of the temperature caused by the piston friction against the cylinder wall.

Besides the cavities 130, fit for partially housing the articulated joint 75, the lever 73 and the connecting rod 74, allow to use rationally and advantageously the space reducing the total dimension of actuator-combs assembly.

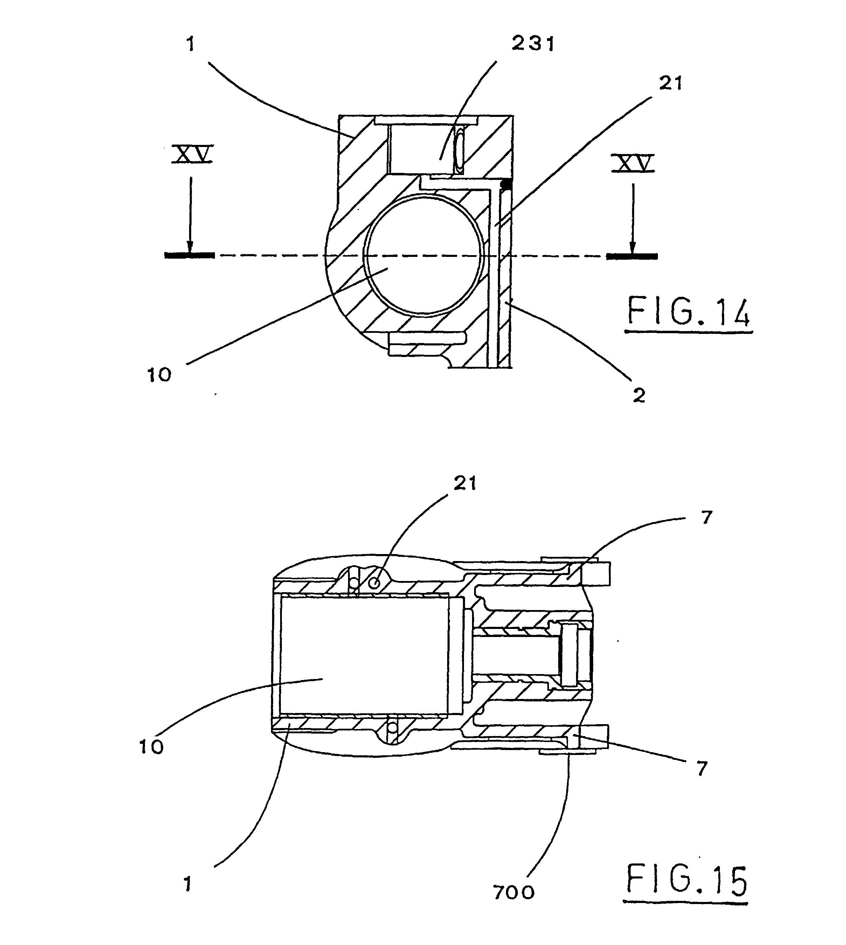

In the variant shown in figures 14 and 15 the tubular element 13 comprises, on opposite sides and integral to this latter, a pair of plates 7, substantially parallel and "wide U" shaped, provided with passthrough seats 700, to witch the combs F are pivoted. Besides the feeding duct 21 extends inside the connection arm 2 and the central body 1 and flows in correspondence of the feeding chamber 231 of the distributing valve 23.

The elements of the pneumatic actuator are easy to be made, extremely strong and functional, and are in a small number, so guaranteeing reliability and manufacturing low-costs.

## Claims

1. Pneumatic actuator for operating combs (F) for harvesting fruit comprising:
- a monolithic central body (1) having a longitudinal cylindrical seat (10) with a cylinder (11) in which slides an alternative piston (12), and sideways provided with a connection arm (2) linked to a pneumatic feeding source, said central body (1) having a distributing valve (23) and a tubular element (13) in which slides a stem (120) of the piston (12);
- a feeding duct (21) connecting the pneumatic source to the distributing valve (23);
- two delivery channels, first (30a) and second (30b), starting from a feeding chamber (231) of the distributing valve (23) and entering respectively into chambers, internal (10a) and external (10b), of the cylinder (10), said two delivery channels, first (30a) and second (30b), being set one or the other alternatively in flow communication with the feeding duct (21) through a switching element (234) supported by a movable mean (235) sliding inside the distributing valve (23);
- an external exhausting channel (31), made in the cover (81) of the distributing valve (23), connected alternatively by the switching element (234) to the first delivery channel (30a) while the second (30b) is connected to the feeding duct (21) and to the second delivery channel (30b) in the contrary situation;
- two return channels, first (4a) and second (4b), respectively provided with continuously opened external outlets (41a, 41b), starting from respective holes, first (11a) and second (11b), being set respectively into the external chamber (10b) and internal chamber (10a) on the wall of the cylinder (11) near its central line, and arriving respectively into switching chambers, first (233a) and second (233b), located sideways of the feeding chamber (231), which receives slidingly sealed the heads of the movable mean (235), the two return channels, first (4a) and second (4b), being alternatively opened by the piston (12) for switching the movable mean (235).

2. Actuator according to claim 1 **characterized in that** the feeding duct (21) extends inside the connection arm (2) up to near the cylinder (11) where it divides into two ducts, first (21a) and second (21b), which are tangent to the external side wall of the cylinder (11), and flow in correspondence of the feeding chamber (231) of the distributing valve (23).

3. Actuator according to claim 1 **characterized in that** the feeding duct (21) extends inside the connection arm (2) and the central body (1) and flows in correspondence of the feeding chamber (231) of the distributing valve (23).

4. Actuator according to claim 1 **characterized in that** each of the delivery channels, first (30a) and second (30b), is carried out in the cover (81) and in the central body (1).

5. Actuator according to claim 1 **characterized in that** each of the return channels, first (4a) and second (4b), is carried out in the central body (1).

6. Actuator according to claim 1 **characterized in that** the piston (12) comprises:
- two annular bodies, first (51) and second (53), laying against the opposite sides of a shoulder (50) made near to an end of the stem (120) of the piston (12);
- two annular shock absorbers, first (61) and second (63), partially inserted and fixed in the two annular bodies, first (51) and second (53), in correspondence of annular recess, (51a) and (53a), respectively made on related heads of the two annular bodies, first (51) and second (53);
- two seals, first (64) and second (65), inserted in correspondence of annular grooves, (61a) and (63a), respectively carried out on the two annular bodies, first (51) and second (53), and having a diameter to contact the walls of the cylinder (11) so guaranteeing the pressure sealing of the piston (12);
- a bush (6) inserted in a chamber for annular chamfers (51b, 53b), carried out respectively sideways on the two annular bodies, first (51) and second (53), in correspondence of the shoulder (50), and are made to drive the piston (12) inside the cylinder (11) avoiding transversal oscillations thereof.

7. Piston according to claim 6 **characterized in that** the two annular bodies, first (51) and second (53), have related longitudinal passthrough holes (510, 530) whose diameter is a bit smaller than the diameter of the stem (120) so allowing interference assembling on the latter, with the annular bodies, first (51) and second (53), being compressed against the shoulder (50) by counter forces during the alternate switching of the piston (12).

8. Actuator according to claim 1 **characterized in that** the connection arm (2) is rotationally connected with the pneumatic feeding source by means of a coupling (9).

9. Actuator according to claim 1 **characterized in that** the element (13) is integral, on its opposed sides, with a pair of plates (7) pivoted to the combs (F).

10. Actuator according to claim 1 **characterized in that** that further comprises two plates (7) fixed, on opposed sides, to the tubular element (13) for supporting the combs (F).

11. Actuator according to claim 1 **characterized in that** the tubular element (13) has laterally two cavities (130) to allow the free movement of the articulated joints (75), levers (73) and connecting rods (74) transmitting the movement from the stem (120) to the combs (F).

## Patentansprüche

1. Pneumatische Betätigungseinheit zum Betätigen von Kämmen (F) zum Ernten von Früchten mit
einem einstückigen zentralen Gehäuse (1) mit einem längszylindrischen Sitz (10) mit einem Zylinder (11), in dem ein Kolben (12) gleitet, das seitlich mit einem Verbindungsarm (2) versehen ist, der mit einer Pneumatikquelle verbunden ist, wobei das zentrale Gehäuse (1) ein Verteilerventil (23) und ein rohrförmiges Element (13) aufweist, in dem ein Schaft (120) des Kolbens (12) gleitet,
einem Zuführkanal (21), der die Pneumatikquelle mit dem Verteilerventil (23) verbindet,
einem ersten und zweiten Speisekanal (30a, 30b), die von einer Zuführkammer (231) des Verteilerventiles (23) ausgehen und in eine innere und äußere Kammer (10a, 10b) des Zylinders (10) münden, wobei der erste und zweite Speisekanal (30a, 30b) abwechselnd in Strömungsverbindung mit dem Zuführkanal (21) durch ein Schaltelement (234) gebracht werden, das von einer beweglichen Einrichtung (235) gelagert wird, die innerhalb des Verteilerventiles (23) gleitet,
einem äußeren Auslaßkanal (31), der in der Abdeckung (81) des Verteilerventiles (23) ausgebildet ist und abwechselnd vom Schaltelement (234) mit dem ersten Speisekanal (30a) verbunden wird, während der zweite Speisekanal (30b) mit dem Zuführkanal (21) in Verbindung steht, und mit dem zweiten Speisekanal (30b) in der gegenteiligen Situation verbunden wird, und
einem ersten und zweiten Rückführkanal (4a, 4b), die jeweils mit kontinuierlich geöffneten externen Auslässen (41a, 41b) versehen sind und von einem ersten und zweiten Loch (11a, 11b) ausgehen, welche in der äußeren Kammer (10b) und der, inneren Kammer (10a) an der Wand des Zylinders (11) in der Nähe seiner Mittellinie angeordnet sind, und in eine erste und zweite Schaltkammer (233a, 233b) münden, die seitlich der Zuführkammer (231) angeordnet sind, welche die Köpfe der beweglichen Einrichtung (235) in gleitend abgedichteter Weise aufnimmt, wobei der erste und zweite Rückführkanal (4a, 4b) vom Kolben (12) zum Schalten der beweglichen Einrichtung (235) abwechselnd geöffnet werden.

2. Betätigungseinheit nach Anspruch 1, **dadurch gekennzeichnet, daß** sich der Zuführkanal (21) im Verbindungsarm (2) bis in die Nähe des Zylinders (11) erstreckt, wo er in einen ersten und zweiten Kanal (21a, 21b) unterteilt wird, die sich tangential zur äußeren Seitenwand des Zylinders (11) erstrecken und in die Zuführkammer (231) des Verteilerventiles (23) münden.

3. Betätigungseinheit nach Anspruch 1, **dadurch gekennzeichnet, daß** sich der Zuführkanal (21) innerhalb des Verbindungsarmes (2) und des zentralen Gehäuses (1) erstreckt und in die Zuführkammer (231) des Verteilerventiles (23) mündet.

4. Betätigungseinheit nach Anspruch 1, **dadurch gekennzeichnet, daß** jeder Speisekanal (30a, 30b) in der Abdeckung (81) und im zentralen Gehäuse (1) angeordnet ist.

5. Betätigungseinheit nach Anspruch 1, **dadurch gekennzeichnet, daß** jeder Rückführkanal (4a, 4b) im zentralen Gehäuse (1) angeordnet ist.

6. Betätigungseinheit nach Anspruch 1, **dadurch gekennzeichnet, daß** der Kolben (12) umfaßt:
einen ersten und zweiten ringförmigen Körper (51, 53), die gegen die gegenüberliegenden Seiten einer Schulter (50) gelagert sind, welche in der Nähe eines Endes des Schaftes (120) des Kolbens (12) ausgebildet ist,
einen ersten und zweiten ringförmigen Stoßdämpfer (61, 63), die teilweise in die beiden ringförmigen Körper (51, 53) entsprechend einer ringförmigen Ausnehmung (51a, 53a), die auf entsprechenden Köpfen der beiden ringförmigen Körper (51, 53) ausgebildet ist, eingesetzt und darin fixiert sind,
eine erste und zweite Abdichtung (64, 65), die in entsprechende Ringnuten (61a, 63a) eingesetzt sind, welche am ersten und zweiten ringförmigen Körper (51, 53) vorgesehen sind, wobei die Dichtungen einen solchen Durchmesser besitzen, daß sie die Wände des Zylinders (11) kontaktieren und auf diese Weise eine Druckabdichtung des Kolbens (12) garantieren, und
eine Buchse (6), die in eine durch ringförmige Abfasungen (51b, 53b) gebildete Kammer eingesetzt ist, welche seitlich an den beiden ringförmigen Körpern (51, 53) entsprechend der Schulter (50) ausgebildet ist, so daß der Kolben (12) innerhalb des Zylinders (11) unter Vermeidung von Querschwingungen angetrieben wird.

7. Kolben nach Anspruch 6, **dadurch gekennzeichnet, daß** der erste und zweite ringförmige Körper (51, 53) entsprechende Längsdurchgangslöcher (510, 530) aufweisen, deren Durchmesser etwas geringer ist als der Durchmesser des Schaftes (120), so daß sie an diesem mittels Preßpassung montiert werden können, wobei der erste und zweite ringförmige Körper (51, 53) während der alternierenden Schaltung des Kolbens (12) durch Gegenkräfte gegen die Schulter (50) gepreßt werden.

8. Betätigungseinheit nach Anspruch 1, **dadurch gekennzeichnet, daß** der Verbindungsarm (2) mit Hilfe einer Kupplung (9) drehbar mit der Pneumatikquelle verbunden ist.

9. Betätigungseinheit nach Anspruch 1, **dadurch gekennzeichnet, daß** das Element (13) auf seinen gegenüberliegenden Seiten einstückig mit einem Paar von Platten (7) ausgebildet ist, die an den Kämmen (F) schwenkbar gelagert sind.

10. Betätigungseinheit nach Anspruch 1, **dadurch gekennzeichnet, daß** sie des weiteren zwei Platten (7) umfaßt, die auf gegenüberliegenden Seiten mit dem rohrförmigen Element (13) zur Lagerung der Kämme (F) befestigt sind.

11. Betätigungseinheit nach Anspruch 1, **dadurch gekennzeichnet, daß** das rohrförmige Element (13) seitlich zwei Hohlräume (130) besitzt, um eine freie Bewegung der Gelenkverbindungen (75), Hebel (73) und Verbindungsstangen (74) zur Übertragung der Bewegung vom Schaft (120) auf die Kämme (F) zu ermöglichen.

## Revendications

1. Actionneur pneumatique pour commander les peignes (F) d'une récolteuse de fruits comprenant :
- un corps central monolithique (1) possédant un siège cylindrique longitudinal (10) avec un cylindre (11) dans lequel glisse un piston alternatif (12), et équipé latéralement d'un bras de connexion (2) relié à une source d'alimentation pneumatique, ledit corps central (1) possédant une soupape de distribution (23) et un élément tubulaire (13) dans lequel glisse une tige (120) du piston (12) ;
- une conduite d'alimentation (21) reliant la source pneumatique à la soupape de distribution (23);
- deux canaux distributeurs, un premier (30a) et un second (30b), partant d'une chambre d'alimentation (231) de la soupape de distribution (23) et entrant respectivement dans les chambres, interne (10a) et externe (10b), du cylindre (10), lesdits deux canaux distributeurs, un premier (30a) et un second (30b), étant l'un ou l'autre respectivement réglés dans une communication de débit avec la conduite d'alimentation (21) via un élément de commutation (234) supporté par un moyen mobile (235) glissant à l'intérieur de la soupape de distribution (23) ;
- une conduite d'échappement externe (31), faite dans le couvercle (81) de la soupape de distribution (23), reliée alternativement par l'élément de commutation (234) au premier canal distributeur (30a) tandis que le second (30b) est relié à la conduite d'alimentation (21) et au second canal distributeur (30b) dans la situation inverse ;
- deux canaux de retour, un premier (4a) et un second (4b), respectivement équipés d'orifices de sortie externes ouverts en permanence (41a, 41b), partant de trous respectifs, un premier (11a) et un second (11b), étant l'un ou l'autre respectivement dans la chambre externe (10b) et dans la chambre interne (10a) sur la paroi du cylindre (11) à proximité de sa ligne centrale, et arrivant respectivement dans les chambres de commutation, une première (233a) et une seconde (233b), situées sur les côtés de la chambre d'alimentation (231), qui reçoit les têtes coulissantes hermétiquement du moyen mobile (235), les deux canaux de retour, un premier (4a) et un second (4b), étant tour à tour ouverts par le piston (12) pour actionner le moyen mobile (235).

2. Actionneur selon la revendication 1 **caractérisé en ce que** la conduite d'alimentation (21) s'étend à l'intérieur du bras de connexion (2) jusqu'à proximité du cylindre (11) où elle se divise en deux conduites, une première (21a) et une seconde (21b), tangentes à la paroi latérale externe du cylindre (11), et se déverse en correspondance de la chambre d'alimentation (231) de la soupape de distribution (23).

3. Actionneur selon la revendication 1 **caractérisé en ce que** la conduite d'alimentation (21) s'étend à l'intérieur du bras de connexion (2) et du corps central (1) et se déverse en correspondance de la chambre d'alimentation (231) de la soupape de distribution (23).

4. Actionneur selon la revendication 1 **caractérisé en ce que** chacun des canaux distributeurs, le premier (30a) et le second (30b), est exécuté dans le couvercle (81) et dans le corps central (1).

5. Actionneur selon la revendication 1 **caractérisé en ce que** chacun des canaux de retour, le premier (4a) et le second (4b), est exécuté dans le corps central (1).

6. Actionneur selon la revendication 1 **caractérisé en ce que** le piston (12) comprend :
- deux corps annulaires, un premier (51) et un second (53), reposant contre les parois opposées d'un épaulement (50) près d'une extrémité de la tige (120) du piston (12);
- deux amortisseurs annulaires, un premier (61) et un second (63), partiellement insérés et fixés dans les deux corps annulaires, un premier (51) et un second (53), en correspondance d'un enfoncement annulaire, (51a) et (53a), et respectivement composés sur les têtes correspondantes de deux corps annulaires, le premier (51) et le second (53);
- deux joints, un premier (64) et un second (65), insérés en correspondance des gorges annulaires, (61a) et (63a), respectivement posés sur les deux corps annulaires, le premier (51) et le second (53), ayant un diamètre permettant un contact avec les parois du cylindre (11) garantissant ainsi l'étanchéité du piston (12);
- une douille (6) insérée dans une chambre pour des chanfreins annulaires (51b, 53b), exécutés latéralement respectivement sur les deux corps annulaires, un premier (51) et un second (53), en correspondance de l'épaulement (50), et conçus pour commander le piston (12) à l'intérieur du cylindre (11) évitant les oscillations transversales de celui-ci.

7. Piston selon la revendication 6 **caractérisé en ce que** les deux corps circulaires, un premier (51) et un second (53), sont munis de trous transversaux longitudinaux associés (510, 530) dont le diamètre est un peu plus petit que le diamètre de la tige (120) permettant un assemblage d'interférence de cette dernière avec les corps annulaires, un premier (51) et un second (53), compressés contre l'épaulement (50) par des forces contraires durant l'actionnement alterné du piston (12).

8. Actionneur selon la revendication 1 **caractérisé en ce que** le bras de connexion (2) est reliés par rotation à la source d'alimentation pneumatique au moyen d'un raccord (9).

9. Actionneur selon la revendication 1 **caractérisé en ce que** l'élément (13) est intégral, sur ses côtés opposées, avec une paire de plaques (7) articulées sur les peignes (F).

10. Actionneur selon la revendication 1 **caractérisé en ce qu'**il comprend également deux plaques (7) fixées, sur les côtés opposés, à l'élément tubulaire (13) pour supporter les peignes (F).

11. Actionneur selon la revendication 1 **caractérisé en ce que** l'élément tubulaire (13) possède deux cavités centrales latérales (130) permettant le mouvement libre des joints articulés (75), des leviers (73) et des bielles (74) transmettant le déplacement de la tige (120) vers les peignes (F).
